# EUROPÄISCHE PATENTSCHRIFT

(11) **EP 2 315 181 B1**
(45) Veröffentlichungstag und Bekanntmachung des Hinweises auf die Patenterteilung: **01.04.2015**
(21) Anmeldenummer: 09172641.4
(22) Anmeldetag: 09.10.2009
(51) Int. Cl.: G06T 17/20, G06T 7/00

(54) **Verfahren und System zur Rekonstruktion der Oberfläche von 3D-Objekten in einem Multikamerasystem**
Method and system for reconstructing the surface of 3D objects in a multi-camera system
Procédé et système de reconstruction de la surface d'objets en 3D dans un système à plusieurs caméras

(43) Veröffentlichungstag der Anmeldung: 27.04.2011
(73) Patentinhaber: Deutsche Telekom AG, 53113 Bonn (DE)
(72) Erfinder: Graffunder, Andreas, 13125 Berlin (DE)
(74) Vertreter: Vossius & Partner

(56) Entgegenhaltungen:
- BOYER E ET AL: "A hybrid approach for computing visual hulls of complex objects" PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, Bd. 1, 18. Juni 2003 (2003-06-18), Seiten 695-701, XP010644965 ISBN: 978-0-7695-1900-5
- ZHANG SHUJUN ET AL: "DreamWorld: CUDA-accelerated real-time 3D modeling system" VIRTUAL ENVIRONMENTS, HUMAN-COMPUTER INTERFACES AND MEASUREMENTS SYSTEMS, 2009. VECIMS '09. IEEE INTERNATIONAL CONFERENCE ON, IEEE, PISCATAWAY, NJ, USA, 11. Mai 2009 (2009-05-11), Seiten 168-173, XP031470954 ISBN: 978-1-4244-3808-2
- FRANCO J-S ET AL: "A Distributed Approach for Real Time 3D Modeling" 20040627; 20040627 - 20040602, 27. Juni 2004 (2004-06-27), Seiten 31-31, XP010761976
- NIEM W: "ROBUST AND FAST MODELLING OF 3D NATURAL OBJECTS FROM MULTIPLE VIEWS" PROCEEDINGS OF THE SPIE - THE INTERNATIONAL SOCIETY FOR OPTICAL ENGINEERING, SPIE, US, Bd. 2182, 7. Februar 1994 (1994-02-07), Seiten 388-397, XP008017826 ISSN: 0277-786X
- YAGEL R ET AL: "Template-based volume viewing" COMPUTER GRAPHICS FORUM NETHERLANDS, Bd. 11, Nr. 3, 1992, Seiten C153-C167, XP007911861 ISSN: 0167-7055
- SHOJI K ET AL: "Run-based volume intersection for shape recovery of objects from their silhouettes" PROCEEDINGS OF THE SPIE - THE INTERNATIONAL SOCIETY FOR OPTICAL ENGINEERING, SPIE, US, Bd. 6056, 16. Januar 2006 (2006-01-16), Seiten 6056/1-8, XP007911889 ISSN: 0277-786X
- KUHN S ET AL: "Multi-View Reconstruction of Unknown Objects in the Presence of Known Occlusions", Technical Report, 21 July 2009 (2009-07-21), pages 1-9, XP003028285, Universitätsbibliothek Bayreuth Retrieved from the Internet: URL:http://opus.ub.uni-bayreuth.de/volltex te/2009/576/ [retrieved on 2011-09-12]

## Beschreibung

### Gebiet der Erfindung

Die Erfindung betrifft ein Verfahren zur Rekonstruktion der Oberfläche von 3D-Objekten unter Verwendung mehrerer, M, Kameras, die über ein Datennetzwerk verbunden sind, wobei sich das 3D-Objekt in einem durch die Kameras definierten Arbeitsraum befindet, durch einmalige initiale Berechnung, für die gegebene Kameraanordnung der M Kameras, von 3D-Daten in der Form linear angeordneter 3D-Punktestapel sowie Abbildungsdaten anhand eines Abbildungsmodells; und Verwendung eines Volumen-basierenden Verfahrens, das nur die Oberflächen-nahen Volumenelemente eines Objektes erfasst, zur Oberflächenrekonstruktion, wobei der 3D-Raum durch ein Gitter von Volumenelementen repräsentiert wird. Ferner betrifft die Erfindung ein entsprechendes System. Das Verfahren ist insbesondere computerimplementiert.

### Hintergrund der Erfindung

Die Erfindung betrifft die Rekonstruktion der Oberfläche von dreidimensionalen Objekten, die sich im Arbeitsraum eines Multi-Kamerasystems befinden. Unter einem Multi-Kamerasystem wird erfindungsgemäß eine Menge von Videokameras verstanden, die einen begrenzten Teil des 3D-Raumes (den sogenannten Arbeitsraum) aufnehmen. Es wird vorausgesetzt, dass diese Kameras kalibriert und synchronisiert sind (s.u.). Zur Rekonstruktion der Objekte wird ein Ensemble von Bildern herangezogen, die zu dem gleichen Zeitpunkt von den Kameras geliefert werden, d.h. jeder Abtastzeitpunkt der Multi-Videosequenz liefert eine Rekonstruktion. Damit ist es möglich, zeitlich veränderliche Objekte durch eine solche Folge von aufeinanderfolgenden Rekonstruktionen zu modellieren. Für Anwendungen im Multimediabereich (z.B. 3D-Video und -TV, Free Viewpoint-Video und -TV) besteht eine besondere Herausforderung darin, den Content (3D-Rekonstruktionen) mit möglichst geringem zeitlichen Aufwand zu generieren. Im Fall von Live-TV muss die Rekonstruktion in Echtzeit, d.h. mit z.B. 25 Rekonstruktionen pro Sekunde erfolgen.

Im Stand der Technik sind viele Verfahren bekannt, die aus den Videosequenzen eines Multi-Kamerasystems die geometrische Form eines Objektes berechnen, d.h. "rekonstruieren". Bei den sogenannten "Shape From Silhouettes" Verfahren bilden die Objekt-Silhouetten, die durch Projektion des zu rekonstruierenden Objekts in die Kameraebenen der einzelnen Videokameras und nachfolgende Vordergrund/Hintergrund-Trennung entstehen, den Ausgangspunkt. Die Silhouette eines Objekts wird üblicherweise durch ein binäres Bild dargestellt, d.h. an den Stellen der Objekt-Silhouette beträgt der Wert 1 und in der Region des Bildhintergrundes beträgt der Wert 0. Die Objekt-Silhouette wird duch die Objekt-Kontur begrenzt. Verbindet man die Punkte einer Objekt-Silhouette mit dem Brennpunkt der jeweiligen Kamera, und verlängert die so entstehenden Strahlen in den 3D-Arbeitsraum der Kameras hinein, so bildet dieses Strahlenbündel einen Körper, den sog. Viewing Cone (vgl. Franco, Jean-Sebastien et al., "Efficient Polyhedral Modeling from Silhouettes", in IEEE Transactions on Pattern Analysis and Machine Intelligence, Volume 31, Number 3, Pages 414--427, March 2009). Wenn man für dasselbe Objekt die so definierten Viewing Cones aller Kameras zum Durchschnitt bringt, entsteht ein Körper, der als Visuelle Hülle (engl. Visual Hull) bezeichnet wird. Per Konstruktion muss das Objekt innerhalb der Visuellen Hülle liegen, so dass die Visuelle Hülle eine Approximation der geometrischen Form des Objektes darstellt.

Zur Generierung der Visuellen Hülle wird bei den Volumen-basierenden Verfahren der 3D-Raum durch ein Gitter von Volumenelementen (Voxels) repräsentiert. Diese Voxels werden in die Bildebenen der Kameras projiziert und getestet, ob sie in der von dem Objekt okupierten Bildregion liegen. Ist dies der Fall, so wird das betreffende Voxel als zur Visuellen Hülle zugehörig markiert. Das Ergebnis dieser Operation stellt daher eine Approximation für die Visuelle Hülle dar.

Die Anzahl der Rechenoperationen ist hierbei asymptotisch proportional zu M*N³, wobei M die Anzahl der Kameras und N die Anzahl der Gitterpunkte pro Raumrichtung bezeichnen. Wegen der kubischen Abhängigkeit stellt die Komplexität daher bei hohen Auflösungen (hohes N) ein wesentliches Problem dieser Ansätze dar. Bei dem von Ladikos, Alexander et al. in "Efficient Visual Hull Computation for Real-Time 3D Reconstruction using CUDA", Computer Vision and Pattern Recognition Workshops, 2008, CVPR Workshops 2008, IEEE Computer Society Conference on 23-28 June 2008 vorgeschlagenen Verfahren werden Projektionen der Kantenpunkte quaderförmiger Voxels vorausberechnet um Rechenzeit zu sparen. Trotzdem ergibt sich bei diesem Verfahren ein mit der Auflösung kubisch steigender Rechenaufwand, so dass nur bei sehr groben Auflösungen Echtzeitrekonstruktionen möglich sind. Eine Variante dieser Verfahren stellt die Verwendung von Octrees dar, die eine hierarchische Aufteilung des 3D-Raumes in einer Baumstruktur liefern. Mit diesem Ansatz lässt sich die Komplexität reduzieren, allerdings wird dieser Vorteil durch den höheren Verwaltungsaufwand bei der Erstellung der Baumstruktur zum Teil wieder zunichte gemacht. Unter Einsatz spezieller Hardware (GPGPUs) wurde durch massive Parallelverarbeitung und für einfache Ein-Personen Szenen eine Echtzeit-Rekonstruktion bei N=128 berichtet, was für viele Anwendungen jedoch nicht ausreichend ist. Die Verwendung von Octrees hat zudem weitere Nachteile:
1. Prinzipbedingt kann man die Auflösung N nur in Potenzen von 2 wählen, so dass die Wahlmöglichkeiten insbesondere bei höheren Auflösungen stark abnehmen (z.B. Sprung von N=256 auf die nächst höhere mögliche Stufe von N=512). Dies führt dazu, dass man die Auflösung nicht gut an die vorhandenen Anforderungen und Möglichkeiten (Rechnerleistung) anpassen kann, mit der Konsequenz, dass man unter Umständen mit einer unnötig geringen Auflösung arbeiten muss.
2. Prinzipbedingt können nur 3D-Gitter mit kubischen Volumenelementen verwendet werden. In manchen Anwendungen kann aber die Verwendung anders gearteter Gitter von Vorteil sein. Beispielsweise zylindrische Formen oder ein an die Geometrie des Multikamerasystems exakt angepasster Arbeitsraum können wesentlich effizienter sein.

Neben den volumen-basierenden Verfahren wurden Verfahren vorgeschlagen, die die Oberfläche direkt konstruieren. Das von Franco et al angegebene Oberflächen-basierende Verfahren approximiert die Objekt-Kontur durch einen Polygonzug. Die Verbindung der Eckpunkte dieses Polygons mit dem Brennpunkt der Kamera und Verlängerung in den 3D-Arbeitsraum der Kamera hinein bildet ein Bündel von Strahlen, die die Oberfläche eines polyhedralen Kegels definieren. Durch Kombination der Oberflächen der polyhedralen Kegel von allen beteiligten Kameras entsteht eine Approximation der Oberfläche der Visuellen Hülle und damit eine Approximation für die Oberfläche des zu rekonstruierenden Objekts. Da hier nicht das ganze Volumen, sondern direkt die Oberfläche des zu rekonstruierenden Objekts berechnet wird, kann der kubische Anstieg des Rechenaufwands mit der Erhöhung der räumlichen Auflösung vermieden werden. Allerdings sind bei diesem Verfahren komplizierte Fallunterscheidungen nötig, so dass der Algorithmus trotz der von Franco et al. berichteten effizienten Realisierung eine hohe Komplexität aufweist, so dass Echtzeit-Rekonstruktionen mit diesem Verfahren selbst unter Ausnutzung aufwändiger Parallelisierungstechniken nur bei sehr groben räumlichen Auflösungen möglich sind.

Ein weiterer Nachteil dieses Verfahrens (und darüber hinaus aller Oberflächen-basierenden Verfahren) liegt in seiner Anfälligkeit gegenüber Kalibrierungsfehlern und Ungenauigkeiten in der Bestimmung der Objekt-Silhouetten, vgl. Ladikos et al.

Es ist allgemein bekannt, dass Volumen-basierende Verfahren verglichen mit Oberflächen-basierenden Verfahren eine erhöhte Robustheit gegenüber Kalibrierungsfehlern und Ungenauigkeiten in der Bestimmung der Objekt-Silhouetten aufweisen, vgl. Ladikos et al.

Boyer et al., 2003, "A hybrid approach for computing visual hulls of complex objects" beschreibt ein hybrides Verfahren, das sowohl eine direkte Konstruktion der Objektoberfläche als auch eine Volumen-basierende Komponente aufweist. Ausgehend von einer polygonalen Beschreibung der Objektkontur wird für jeden Punkt des Polygons die Menge der zu diesem Punkt gehörenden Epipolarlinien in den Bildebenen der anderen Kameras herangezogen. Für jede Epipolarlinie werden die Schnittpunkte mit den Konturen der jeweiligen Objekt-Silhouette berechnet. Aufgrund der als bekannt vorausgesetzten Kameraparameter lassen sich aus diesen 2D-Schnittpunkten entsprechende 3D-Oberflächenpunkte des Objektes gewinnen. Allerdings ist die so berechnete Punktedichte nicht ausreichend. Um eine vollständige Darstellung der Objektoberfläche zu erreichen und außerdem eine gewisse Robustheit zu gewährleisten, wird eine 3D-Delaunay Triangulierung durchgeführt, die ein optimales Netz von Tetraedern als räumliche Diskretisierung liefert, aus dem dann die Oberfläche des Objekts gewonnen wird.

Shujun et al., 2009, "DreamWorld: CUDA-accelerated real-time 3D modelling system" beschreibt ein Volumen-basierendes Verfahren. Es verwendet voraus berechnete Look-Up Tables für die Bildkoordinaten von Punkten eines regulären 3D-Gitters. Allerdings werden in dem Ansatz in D2 noch die Koordinaten der "Bounding Squares" der in die Bildebenen der einzelnen Kameras projizierten Würfel des 3D-Gitters (Projektionen der Würfel sind i.a. Sechsecke, "Hexagons") vorausberechnet und in der Form von Look-Up Tables benutzt. Während des Betriebs wird in jedem Kamerabild eine Half Distance Transform je für den Bildvordergrund und den Bildhintergrund berechnet. Mit diesen beiden Transformationen werden dann die Schnittmengen eines jeden Bounding Square mit den Objekt-Silhouetten in allen Kameras berechnet (Viewing Cone Intersection) und gemäß der Ergebnisse die zugeordneten Würfel klassifiziert. Auf diese Weise werden diejenigen Würfel bestimmt, die an der Objektoberfläche liegen.

Franco et al., 2004, "A distributed approach for real-time 3D modelling" beschreibt eine Methode zur Parallelisierung. Außerdem wird ein Verfahren angegeben, das die aufwändige 3D-Delaunay Triangulierung vermeidet.

Kuhn, Stefan et al., "Multi-View Reconstruction of Unknown Objects in the Presence of Known Occlusions", Technical Report, 21. Juli 2009, Seiten 1-9, Universitätsbibliothek Bayreuth, beschreibt ein Verfahren zur Rekonstruktion der Oberfläche von 3D-Objekten unter Verwendung mehrerer Kameras, die über ein Datennetzwerk verbunden sind, wobei sich das 3D-Objekt in einem durch die Kameras definierten Arbeitsraum befindet. Gemäß dem darin beschriebenen Algorithmus werden alle Pixel einer Silhouette einigen Tests unterzogen, um die entsprechenden (d.h. mit dem Pixel verbundenen) 3D-Punkte (dort "Voxel" genannt) als zum Objekt zugehörig oder nicht zu klassifizieren. Weiterhin wird in dem beschriebenen Verfahren eine Funktion definiert, die einen 3D-Punktestapel (voxelList(E)) für jeden Pixel (bzw. jede Pixeledge E) liefert. Pixel für Pixel der Objektsilhouette wird mit dieser Funktion jeweils ein 3D-Punktestapel übergeben, der dann Punkt für Punkt abgearbeitet wird. Dabei werden für jeden 3D-Punkt mit einer weiteren Funktion vorausberechnete Koordinaten der Projektionen des 3D-Punktes in die jeweils anderen Kameras abgerufen und getestet, ob der jeweilige Projektionspunkt im Inneren der Silhouette der jeweils anderen Kamera liegt.

### Zusammenfassung der Erfindung

Der Erfindung liegt die Aufgabe zugrunde, ein Rekonstruktionsverfahren anzugeben, das die Vorteile der Volumen-basierenden Verfahren mit denen der Oberflächen-basierenden Verfahren verbindet und gleichzeitig deren Nachteile weitestgehend vermeidet. Diese Aufgabe wird mit den Merkmalen der Ansprüche gelöst.

Die Erfindung stellt Verfahren gemäß Patentanspruch 1 bereit zur Rekonstruktion der Oberfläche von 3D-Objekten unter Verwendung mehrerer, M, Kameras, die über ein Datennetzwerk verbunden sind, wobei sich das 3D-Objekt in einem durch die Kameras definierten Arbeitsraum befindet.

### Vorzugsweise weist Schritt a) des Patentanspruchs

1 die Schritte auf:
   a1) Diskretisierung des Arbeitsraumes und Indizierung der einzelnen Punkte der sich ergebenden 3D-Gitterpunkte;
   a2) Bestimmen der einem Bildpunkt r zuzurechnenden 3D-Punkte R im Gitter durch Anwendung eines Abbildungsmodells r = Proi * R, wobei R = (WX, WY, WZ, W)^{T} die homogenen Koordinaten eines 3D-Punktes (X, Y, Z) und r = (wx, wy, w)^{T} die homogenen Koordinaten des zugehörigen Bildpunktes (x, y) bezeichnen, und Speichern der Indizes der 3D-Punkte in einem drei-dimensionalen Feld, so dass jedem Bildpunkt ein Stapel von 3D-Punkten des 3D-Gitters zugeordnet ist;
   a3) Speichern der 3D-Punktestapel in einem linearen Array und
   a4) Bestimmen der Abbildungen der Indizes der Punkte des 3D-Gitters in die Bildebenen der M Kameras.
      Ferner weist Schritt c) des Patentanspruchs 1 vorzugsweise die Schritte auf:
   c1) Trennen des zu rekonstruierenden Objektes vom Bildhintergrund für jedes eingelesene Kamerabild, um ein Objekt-Silhouettenbild zu erhalten;
   c2) in jeder Kamera erfolgendes Berechnen, aus dem im Schritt c1) erhaltenen Objekt-Silhouettenbild, des Objekt-Konturbildes, das die Objekt-Konturen enthält und
   c3) Auslesen, von 3D-Punktestapeln aus dem PilesArray, die zu einer Umgebung der Objektkontur gehören und Aneinanderreihung dieser 3D-Punktestapel dem ConeArray.
      Ferner weist Schritt d) vorzugsweise die Schritte auf:
   d1) Senden der von einer Kamera erhaltenen Objekt-Silhouette des aufgenommenen Objektes an die jeweils anderen Kameras;
   d2) Empfangen der von den jeweils anderen Kameras gesendeten Objekt-Silhouette des aufgenommenen Objektes und
   d3) Berechnen, für jede Kamera, der Datenpunkt-Schnittmenge der einzelnen Konusränder, wobei für eine Kamera ein 3D-Punkt des jeweiligen ConeArrays zum zu berechnenden Durchschnitt gehört, wenn er jeweils in die empfangenen Objekt-Silhouetten aller jeweils anderen Kameras fällt.
      Ferner weist Schritt e)des Patentanspruchs 1 vorzugsweise die Schritte auf:
   e1) Zusammenfügen der jeweils einen Teil der Oberflächenpunkte des zu rekonstruierenden Objektes repräsentierenden Schnittmengen, die jeweils von den Kameras bereitgestellt werden,
      zu einer Gesamtmenge an Datenpunkten;
   e2) Bestimmen der Oberflächenpunkte aus der Gesamtmenge an Datenpunkten und
   e3) Bestimmen der 3D-Koordinaten der Oberflächenpunkte.

In Schritt c2) erfolgt die Berechnung des Objekt-Konturbildes vorzugsweise durch Subtraktion einer morphologisch erodierten Version des Silhouettenbildes von dem Silhouettenbild. Alternativ dazu erfolgt die Berechnung des Objekt-Konturbildes durch Dilatation des Silhouettenbildes und anschließendem Subtrahieren der erodierten Version des Silhouettenbildes.

Das Senden der von einer Kamera erhaltenen Objekt-Silhouette des aufgenommenen Objektes an die jeweils anderen Kameras erfolgt vorzugsweise parallel zu dem Empfangen der von den jeweils anderen Kameras gesendeten Objekt-Silhouette des aufgenommenen Objektes.

Die von anderen Kameras empfangenen Objekt-Silhouetten werden vorzugsweise zwischengespeichert, um dadurch Netzwerk-Laufzeitunterschiede auszugleichen.

Vor dem Versenden der von einer Kamera erhaltenen Objekt-Silhouette des aufgenommenen Objektes an die jeweils anderen Kameras erfolgt vorzugsweise ein Encodieren der Objekt-Silhouette. Ebenso erfolgt vorzugsweise ein Decodieren der empfangenen Objekt-Silhouette der anderen Kameras, sofern die anderen Kameras encodierte Objekt-Silhouetten versenden.

Das erfindungsgemäße Verfahren zeichnet sich vorzugsweise auch dadurch aus, dass die Schritte c1) bis d3) parallel für jedes der in einem Zeitschritt gelieferten M Kamerabilder parallel erfolgen.

Die Kamerabilder der einzelnen Kameras werden vorzugsweise bereits synchron eingelesen. Die Erfindung umfasst jedoch auch ein erst nach dem Einlesen erfolgendes Synchronisieren der Kamerabilder.

Gemäß einem zweiten Aspekt wird ein System zur Rekonstruktion der Oberfläche von 3D-Objekten bereitgestellt, wobei das System mehrere, M, Kameras aufweist und jede Kamera einer Recheneinheit zugeordnet ist, wobei die Recheneinheiten über ein Datennetzwerk verbunden sind, wobei sich das 3D-Objekt in einem durch die Kameras definierten Arbeitsraum befindet. Die Recheneinheiten sind derart eingerichtet, das erfindungsgemäße Verfahren auszuführen.

Die erfindungsgemäße Lösung basiert somit auf zwei zentralen Ideen. Zunächst wird ein volumen-basierendes Verfahren verwendet, das nur die Oberflächen-nahen Volumenelemente eines Objektes erfasst, d.h. ein großer Teil des Objektinneren wird von vorneherein aus der Berechnung herausgehalten. Dies führt zu einer signifikanten Einsparung von Rechenschritten. Außerdem werden spezielle, neuartige Datenstrukturen initial, d.h. vor dem eigentlichen Rekonstruktionsbetrieb, einmalig für eine gegebene Kameraanordnung berechnet. Diese werden so definiert, dass im eigentlichen Betrieb nur noch extrem einfache Rechenoperationen benötigt werden und eine Parallelisierung auf einfache Weise möglich ist.

Damit ergeben sich folgende Vorteile:
1. Die Beschränkung auf bandförmige Bereiche an den Objekträndern resultiert in einem nur noch quadratisch (d.h. mit N²) anwachsenden Rechenaufwand, d.h. der sonst übliche kubische Anstieg (mit N³) bei Volumen-basierenden Verfahren wird vermieden.
2. Die oben angeführten Nachteile der Octree-Methoden werden vermieden, d.h. die Auflösung (N) kann - im Gegensatz zu den Octree-Methoden - frei gewählt werden und es können beliebige Diskretisierungen des 3D-Raumes (beliebige Gitterstrukturen) verwendet werden. Ferner werden komplexe Verwaltungsoperationen (z.B. Verwaltung einer Baumstruktur) nicht benötigt.
3. Durch ausschließliche Verwendung von extrem einfachen, elementaren Rechenoperationen in den Kernalgorithmen, die sich auf das Kopieren von linearen Arrays (Listen) und sehr einfache boolsche Tests beschränken, ist es mit diesem Verfahren möglich, Echtzeit-Rekonstruktionen mit erheblich höherer Auflösung zu berechnen ohne Einsatz spezieller, komplexer Hardware und bei nur mäßigem Parallelisierungsgrad.
4. Der Grad der Parallelisierung kann durch sehr einfache Änderungen in der Implementierung geändert werden. Bei massiver Parallelisierung (z.B. bei Einsatz von GPUs oder GPGPUs) sind noch erhebliche Steigerungen der Geschwindigkeit möglich, so dass noch wesentlich feinere räumliche Auflösungen oder -bei gleicher Auflösung- größere Arbeitsbereiche verwendet werden können.
5. Die Robustheit gegenüber Kalibrierungsfehlern und Ungenauigkeiten in der Generierung der Objekt-Silhouetten ist hoch, da es sich hier um eine Variante der Volumen-basierenden Verfahren handelt.
6. Durch die initiale Berechnung von Abbildungsdaten können komplexere Kameramodelle verwendet werden, da der zusätzliche Rechenaufwand nur einmalig bei einem gegebenen Multikamerasystem anfällt und daher nicht den normalen Rekonstruktionsbetrieb belastet. Der Vorteil komplexerer Kameramodelle liegt in der höheren Rekonstruktionsgenauigkeit, da Abbildungsverzerrungen der verwendeten Kameraobjektive berücksichtigt werden können. Dies erhöht auch gleichzeitig die Robustheit des gesamten Systems.

### Kurze Beschreibung der Zeichnungen

Vorteilhafte Ausführungsformen der Erfindung werden beispielhaft in den Figuren dargestellt. Es zeigen:
- Fig. 1: ein Beispiel eines Multi-Kamerasystems der vorliegenden Erfindung;
- Fig. 2: ein Beispiel einer 3D-Gitterbox des Arbeitsvolumens und j-te Kamera;
- Fig. 3: ein Beispiel einer 3D-Gitterbox des Arbeitsvolumens und j-te Kamera mit Darstellung der 3D-Punktsäulen (von oben gesehen);
- Fig. 4a: die Trennung des Bildvordergrundes vom Bildhintergrund;
- Fig. 4b: die Konturerzeugung mit Verbreiterungen; und

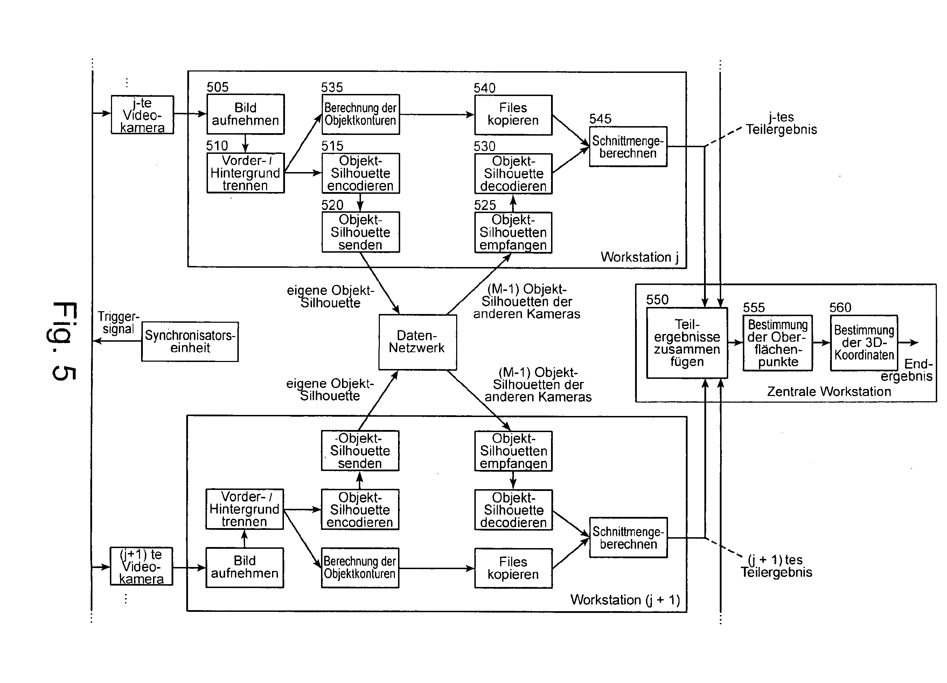

- Fig. 5: ein Blockschaltbild eines bevorzugten erfindungsgemäßen Systems.

### Beschreibung einer bevorzugten Ausführungsform

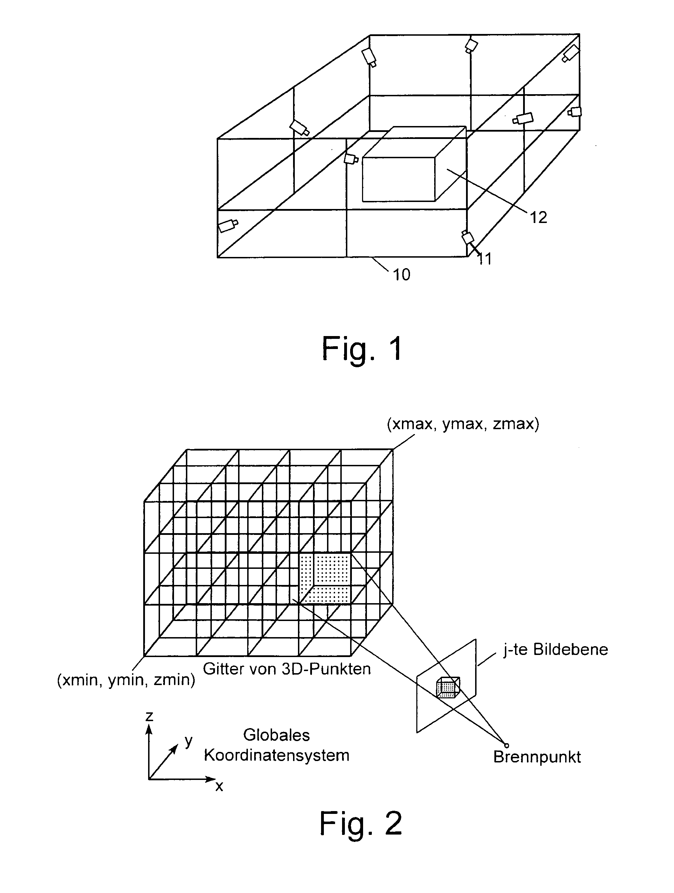

Die Rekonstruktionseinrichtung besteht aus einem üblichen System von M kalibrierten und synchronisierten Kameras 11, die an einem Kameragerüst 10 angeordnet sind, wie dies in Fig. 1 gezeigt ist. Innerhalb des Kameragerüstes befindet sich der Arbeitsraum 12 für 3D-Rekonstruktionen. Um die zeitliche Synchronisation der Kameras 11 zu gewährleisten, werden die Kameras über eine einfache Trigger-Hardware angesteuert. Die Videokameras liefern Abbildungen des zu rekonstruierenden Objekts. Dieser Vorgang lässt sich mit einem üblichen Abbildungsmodell modellieren. Das am häufigsten verwendete Modell ist das aus dem physikalischen Modell der Lochkamera abgeleitete Modell. Dieses ist durch die Projektionsmatrix Proj definiert (im folgenden kennzeichnen Unterstreichungen Vektoren bzw. Matrizen):
r = Proj * R, Proj: [3x4] Matrix
wobei R = (WX, WY, WZ, W)^{T} (das hochgestellte T bedeutet Transponierung) die homogenen Koordinaten eines 3D-Punktes (X, Y, Z) und r = (wx, wy, w)^{T} die homogenen Koordinaten des zugehörigen Bildpunktes (x, y) bezeichnen.

Es wird vorausgesetzt, dass die 12 Elemente der Matrix Proi für jede der M Kameras bekannt sind. Sie werden üblicherweise in einem initialen Kalibrierungsschritt bestimmt. Es können aber auch komplexere Abbildungsmodelle verwendet werden, die verschiedene Abbildungsverzerrungen (z.B. Kissenverzerrungen) modellieren und damit eine höhere Genauigkeit des Modells gewährleisten (siehe z.B. Roger Y. Tsai. A Versatile Camera Calibration Technique for High-Accuracy 3D Machine Vision Metrology Using Off-the-shelf TV Cameras and Lenses. IEEE Journal of Robotics and Automation, Vol. RA-3, No. 4, August 1987).

Die Aufgabe besteht nun darin, in jedem zeitlichen Abtastzeitpunkt aus den von den M Kameras gelieferten Bildern die Oberfläche des zu rekonstruierenden Objekts durch eine dichte Menge von 3D-Punkten auf der Objektoberfläche zu approximieren. Um eine schnelle Verarbeitung der einzelnen Kamerasignale zu erreichen, werden erfindungsgemäß einige besonders aufwändige Verarbeitungsschritte zeitlich parallel mit unterschiedlichen Prozessoren abgearbeitet.

Die im folgenden erläuterten erfindungsgemäßen Schritte 1-3 dienen zur Berechnung einiger Daten und Datenstrukturen, die für die 3D-Rekonstruktion benötigt werden. Sie finden vor dem eigentlichen Betrieb (3D-Rekonstruktion aus Kameradaten) statt und müssen für ein gegebenes Multi-Kamerasystem nur einmal durchgeführt werden.

### 1. Schritt: Definition des Arbeitsraumes und eines 3D-Gitters

Das volumenbasierte Verfahren beruht auf einer Diskretisierung des Arbeitsraumes 12, d.h. desjenigen Raumes, in dem sich die zu rekonstruierenden Objekte befinden. Im Folgenden wird lediglich zur Vereinfachung der Darstellung von einem einzigen Objekt ausgegangen, wobei dies nicht als Einschränkung der Erfindung zu verstehen ist. Die Diskretisierung des Arbeitsraumes wird erreicht durch Definition einer dreidimensionalen, Gitterbox von 3D-Punkten. Diese kann beispielsweise quaderförmig sein, wie in Fig. 2 dargestellt, oder auch beliebige andere Formen aufweisen, beispielsweise zylindrisch oder kugelförmig.

Im folgenden wird als Ausführungsbeispiel von einer quaderförmigen Gitterbox ausgegangen, deren Kanten parallel zu den Achsen eines während der Kalibrierung festgelegten Globalkoordinatensystems ausgerichtet sind. Die Grenzen dieses Quaders sind durch 2 Punkte gegeben:
P1 = (Xmin, Ymin, Zmin) und
P2 = (Xmax, Ymax, Zmax).

Die einzelnen Punkte der Gitterbox werden nach einem bestimmten Verfahren durchnummeriert. Damit ist jedem 3D-Punkt des Gitters ein eindeutiger Index (ind) zugeordnet. Eine einfache Nummerierung ergibt sich im Fall der quaderförmigen Gitterbox wie folgt:
Ind = 0: (Xmin + 0*delta_x, Ymin + 0*delta_y, Zmin + 0*delta_z)
Ind = 1: (Xmin + 0*delta_x, Ymin + 0*delta_y, Zmin + 1 *delta_z)
...
Ind = N_z: (Xmin + 0*delta_x, Ymin + 0*delta_y, Zmin + (N_z-1)*delta_z)
Ind = N_z+1: (Xmin + 0*delta_x, Ymin + 1*delta_y, Zmin + 0*delta_z)
Ind = N_z+2: (Xmin + 0*delta_x, Ymin + 1*delta_y, Zmin + 1*delta_z)
usw.
wobei mit delta_x, delta_y und delta_z die zugehörigen Intervalle auf dem 3D-Gitter in den drei Koordinatenrichtungen bezeichnet werden und N_x, N_y, N_z die Anzahl der Punkte der Gitterbox in den drei Koordinatenrichtungen bezeichnen.

Für eine spätere Rückrechnung der 3D-Koordinaten aus den Indizes werden dazu parallel die 3 Arrays Ind2X, Ind2Y, und Ind2Z berechnet:
Ind2X(ind) = X
Ind2Y(ind) = Y
Ind2Z(ind) = Z

### 2. Schritt: Berechnung der PilesArrays und der LengthsArrays

In diesem Schritt werden die einem Bildpunkt r zuzurechnenden 3D-Punkte R im Gitter bestimmt. Diese ergeben sich, wenn man die einzelnen 3D-Punkte des Gitters durchgeht und für jeden 3D-Punkt den nächstliegenden Bildpunkt auf dem Pixelgitter einer jeden Kamera bestimmt. Dies geschieht durch Anwendung des oben angegebenen Abbildungsmodells
r = Proj * R

u = round(x)
v = round(y)

### Hier bezeichnen

R = (X, Y, Z, 1)^{T} die homogenen Koordinaten des 3D-Gitterpunktes,
r = (wx, wy, w)^{T} die homogenen Koordinaten des zugehörigen Bildpunktes,
(u,v) den ermittelten Punkt auf dem Pixelgitter,
"round" eine Funktion, die eine übliche Rundung auf den nächstliegenden Ganzzahlwert vornimmt.

Der Index des 3D-Punktes (ind) wird in einem drei-dimensionalen Array an der Stelle (u, v, k) gespeichert (Index(u,v,k) = ind), wobei die Zählvariable k beginnend mit 1 mit jedem neuen 3D-Punkt, der an die gleiche Stelle (u,v) projiziert wird, um 1 hoch gezählt wird.

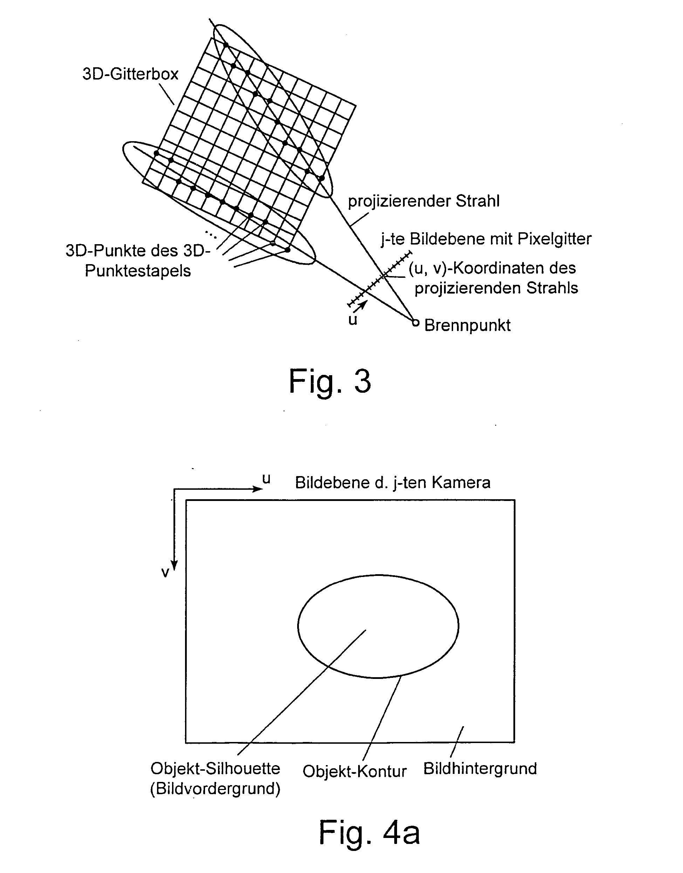

Das Array "Index" enthält also an der Stelle (u,v) die Indizes aller derjenigen 3D-Punkte, die in der Nähe des projizierenden Strahls liegen, der durch den Pixelgitterpunkt (u,v) und den Brennpunkt geht, siehe Fig. 3. D.h. jedem Bildpunkt (u,v) ist damit ein "Stapel" (engl.: Pile) von 3D-Punkten des 3D-Gitters zugeordnet. Mit Length(u,v) sei die Länge dieses 3D-Punktestapels, d.h. die Anzahl der 3D-Punkte bezeichnet. Die Längen dieser 3D-Punktestapel werden in ein lineares Array "LengthsArray" geschrieben, und zwar beginnend bei (u,v) = (1,1) (linker oberer Bildpunkt) und fortschreitend in Zeilenrichtung bis man am unteren rechten Bildpunkt angekommen ist.

Ferner werden die Indizes der 3D-Punkte der einzelnen 3D-Punktestapel ebenfalls beginnend bei (u,v) = (1,1) in ein lineares (d.h. ein-dimensionales) Array "PilesArray" geschrieben:
PilesArray(1) = Index(1,1,1) (Erstes Element des ersten 3D-Punktestapels)
PilesArray(2) = Index(1,1,2)
...
PilesArray(11) = Index(1,1,11), wobei 11 = LengthsArray(1) (Letztes Element des ersten 3D-Punktestapels)
PilesArray(11+1) = Index(1,2,1) (Erstes Element des 2. 3D-Punktestapels)
PilesArray(11+2) = Index(1,2,2)
...
PilesArray(11+12) = Index(1,2,12), wobei 12 = LengthsArray(2) (Letztes Element des 2. 3D-Punktestapels)
...

Die 3D-Punktestapel werden in dem PilesArray also einfach hintereinander geschrieben. Diese Berechnung wird für jede Kamera durchgeführt, d.h. für jede Kamera wird ein zugeordnetes PilesArray und ein zugeordnetes LengthsArray generiert, die mit PilesArray_j und LengthsArray_j (j-te Kamera) bezeichnet werden.

### 3. Schritt: Berechnung der projektiven Abbildungen

In diesem Schritt werden die Abbildungen der Indizes der Punkte des 3D-Gitters in die Bildebenen der M Kameras bestimmt. Für die j-te Kamera erhält man zwei Arrays Pu_j und Pv_j
u_j = Pu_j(ind)
v_j = Pv_j(ind)
wobei (u_j, v_j) die Bildkoordinaten der j-ten Kamera bezeichnen. Die (u_j, v_j) werden hierbei für alle Indizes bestimmt und zwar auf die gleiche Weise, wie die u-, v-Koordinaten in Schritt 2.

Die nachfolgenden Schritte 4 - 15 betreffen die eigentliche Berechnung der 3D-Rekonstruktion der Objektoberfläche. Um eine schnelle Verarbeitung der einzelnen Kamerasignale zu erreichen, werden einige besonders aufwändige Verarbeitungsschritte zeitlich parallel mit unterschiedlichen Prozessoren abgearbeitet. Speziell die Schritte 4 - 12 werden für jedes der in einem Zeitschritt gelieferten M Kamerabilder parallel abgearbeitet. In der hier dargestellten Ausführung wird jeder Kamera eine separate Workstation zugeordnet, die die Schritte 4 - 12 bearbeitet, siehe Fig. 6.

### 4. Schritt: Bild aufnehmen (Block 505)

In diesem Schritt wird das Kamerabild eingelesen. Wenn das zu rekonstruierende Objekt sich zeitlich verändert, muss gewährleistet sein, dass alle Kamerabilder des Multikamerasystems zeitlich synchron eingelesen werden. Dies erreicht man beispielsweise durch Einsatz eines Triggersignals, das von einem üblichen Signalgenerator geliefert und jeder Kamera des Multikamerasystems zugeführt wird.

### 5. Schritt: Vordergrund/Hintergrund trennen (Block 510)

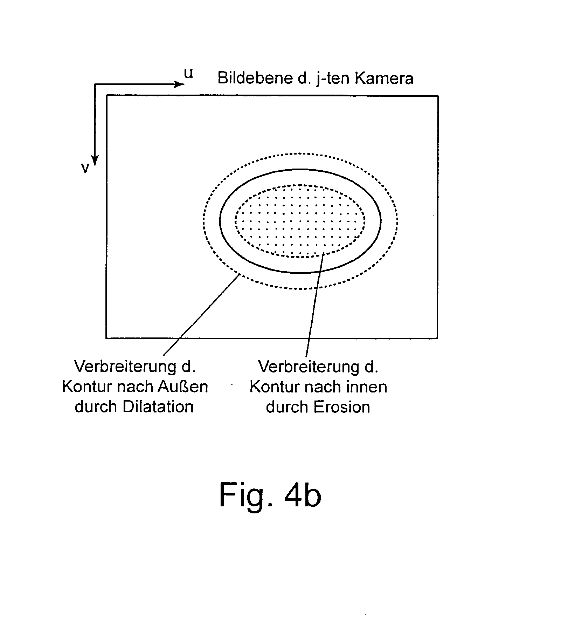

Hier wird eines der üblichen Verfahren verwendet, um das zu rekonstruierende Objekt vom Bildhintergrund freizustellen. Das Ergebnis ist für jede Kamera ein binäres Bild (Silhouettenbild), das in der durch das Objekt okupierten Bildregion (Objekt-Silhouette) den Wert 1 und sonst den Wert 0 (Hintergrund) hat, siehe Fig. 4.

Die nächsten Schritte 6-7 können zeitlich parallel zu den Schritten 8 und 9 durchgeführt werden, um die Gesamtverzögerung durch die Verarbeitungskette möglichst gering zu halten.

### 6. Schritt: Objekt-Silhouette encodieren (Block 515)

Das binäre Silhouettenbild einer jeden Kamera muss an die jeweils anderen Kameras versendet werden. Zu diesem Zweck ist vorzugsweise eine Encodierung bzw. Codierung des Segmentbildes vorzunehmen, um den Datenfluss über das lokale Netzwerk klein zu halten. Hier kann jede übliche Codierung verwendet werden, z.B. eine Run-Length Codierung.

### 7. Schritt: Objekt-Silhouette senden (Block 520)

Die encodierte Objekt-Silhouette wird in Datenpakete verpackt und in üblicher Weise über ein lokales IP Netzwerk vorzugsweise über IP-Multicast Verbindungen versendet. Jede Kamera hat hierbei ihre eigene Multicast-Adresse.

### 8. Schritt: Objekt-Silhouette empfangen (Block 525)

Dies ist der zum 5. Schritt inverse Vorgang, d.h. die Depacketierung der unter den entsprechenden Multicastadressen empfangenen Datenpakete. Es werden die Objekt-Silhouetten der (M-1) anderen Kameras empfangen. Die Identifikation kann z.B. über die verwendeten Multicastadressen erfolgen. Gegebenenfalls muss hier noch eine Zwischenpufferung erfolgen, um unterschiedliche Laufzeiten durch das Netzwerk auszugleichen.

### 9. Schritt: Objekt-Silhouette decodieren (Block 530)

Dies ist der zum 4. Schritt inverse Vorgang, d.h. z.B. die Run-Length-Decodierung.

### 10. Schritt: Berechnung der Objekt-Konturen (Block 535)

Unter den Objekt-Konturen werden hier die verdeckenden Konturen des Objekts in der jeweiligen Bildebene verstanden. Diese sind mit dem Rand der jeweiligen Objekt-Silhouette identisch.

Die Berechnung des Konturbildes C, das die Objekt-Konturen enthält, geschieht vorzugsweise durch Subtraktion einer morphologisch erodierten Version des Silhouettenbildes S (siehe Fig. 4a) gemäß der Gleichung C = S - E(S,str), wobei E den Erosions-Operator und str das Strukturelement der Erosion bezeichnen.

Durch Anwendung der Erosion mit einem festlegbaren Strukturelement entsteht ein Konturbild, das die Objekt-Konturen in verbreiterter Form enthält. Die Verbreiterung der Konturen geschieht dabei in das Objektinnere hinein. Die Breite der Konturen hängt von der Größe des Strukturelementes ab.

Die Verbreiterung der Objekt-Konturen ist für die Funktionsfähigkeit des Verfahrens von Bedeutung, da hierdurch eine Robustheit gegenüber Fehlern im zugrundeliegenden Abbildungsmodell (z.B. Fehler in den Parametern der Projektionsmatrix) und Ungenauigkeiten in der Vordergrund/Hintergrund Trennung erreicht wird. Andererseits wächst mit zunehmender Breite auch der Rechenaufwand für die nachfolgenden Verarbeitungsschritte. Die optimale Breite der Konturen hängt von der Genauigkeit der Kalibrierung und der Vordergrund/Hintergrund Trennung und von der gewählten Bildauflösung ab. Bevorzugt wird eine Breite von ca. 3 - 8 Pixel angesehen.

Um die Robustheit des Verfahrens weiter zu erhöhen, kann alternativ zu der erläuterten Erosion die Kontur zusätzlich nach außen verbreitert werden, wie es ebenso in Fig. 4b gezeigt ist. Dies wird vorzugsweise durch Dilatation des Silhouettenbildes erreicht, bevor die erodierte Version subtrahiert wird, gemäß der Gleichung C = D(S, str1) - E(S,str2), wobei D den Dilatationsoperator bezeichnet und str1 das zugehörige Strukturelement ist. Die Strukturelemente für die Dilatation str1 und Erosion str2 können gleich oder auch verschieden sein.

### 11. Schritt: Piles kopieren (Block 540)

In diesem Schritt werden für jede Kamera diejenigen 3D-Punktestapel (Piles) bestimmt, die in einer Umgebung der Oberfläche des visuellen Konus liegen. Hierzu wird das Konturbild C beginnend mit der linken oberen Ecke zeilenweise durchgegangen und an jeder Pixelposition getestet, ob ein Konturpixel vorliegt (Test auf Wert 1). Wenn ja, wird im LengthsArray die Länge des zugehörigen Piles bestimmt. Danach wird in Zeilenrichtung der nächste Pixelnachbar auf eins gestestet. Bei jeder direkt anschließenden Pixelposition mit Wert 1 wird die Länge des zugehörigen Piles zu SumLength addiert. Dieser Vorgang wird solange fortgesetzt, bis eine Pixelposition mit Wert Null gefunden wird. Ist dies der Fall, so startet der Kopiervorgang. Es werden SumLength Daten aus dem PilesArray in das ConeArray kopiert. Danach wird wieder in Zeilenrichtung nach der nächsten Pixelposition mit Wert 1 gesucht. Dieser Vorgang wird solange wiederholt, bis das gesamte Bild durchlaufen wurde, d.h. bis man am unteren rechten Rand von C angekommen ist.

Das Resultat dieses Algorithmus ist eine Menge von 3D-Punkten (repräsentiert durch die jeweiligen unter Schritt 1 definierten Indizes) am Rand des visuellen Konus.

Im folgenden wird der Algorithmus beispielhaft als Codefragment in der Programmiersprache C angegeben. Dieser Algorithmus setzt voraus, dass das Konturbild C in einem linearen Array durch Aneinanderreihung der einzelnen Zeilen beginnend mit der ersten Zeile in der linken oberen Ecke des Bildes gespeichert ist. Der Algorithmus wird in jeder Kamera-Workstation durchgeführt. Auf diese Weise gelingt eine einfache Parallelisierung. Das folgende Codefragment bezieht sich auf die j-te Kamera. Entsprechend sind die zugeordneten Datenstrukturen mit _j gekennzeichnet.

```
 char* C_j
 short* LengthsArray_j;
 int* ptr1=PilesArray_j;
 int* ptr2=ConeArray_j
 int n_pix = n_rows * n_cols; // Anzahl der Pixel im Konturbild C
 i = 1;
 while (i < (n_pix+1))
 {
  if (C_j(i))
  {
     SumLength = 0;
     while (C_j(i))
     {
      SumLength = SumLength + LengthsArray_j(i);
      i = i+1;
     }
     memcpy (ptr2, ptr1, SumLength *sizeof(int));
     ptr1 = ptr1 + SumLength;
     ptr2 = ptr2 + SumLength;
  }
  ptr1 = ptr1 + LengthsArray_j(i);
  i = i+1;
  }
```

Da hier große zusammenhängende Speicherbereiche kopiert werden, können die in üblichen Rechnerarchitekturen vorhandenen Data-Caches sehr effizient genutzt werden. Dies hat besonders hohe Ausführungsgeschwindigkeiten zur Folge.

### 12. Schritt: Schnittmengen berechnen (Block 545)

In diesem Schritt wird nun die eigentliche Durchschnittsbildung der einzelnen Konusränder durchgeführt. Die Durchschnittsbildung wird für jeden Konus (d.h. für jede Kamera) separat und parallel durchgeführt. Bedingung für die Zugehörigkeit eines 3D-Punktes zum zu berechnenden Durchschnitt ist, dass dieser jeweils in die Objekt-Silhouetten der anderen (m-1) Kameras fällt, d.h. die Projektion in die anderen (m-1) Bilder S_j (j ungleich i) muss dort auf einen Pixel mit dem Wert 1 stoßen. Diese Bedingung wird nacheinander für die einzelnen Kameras getestet. Bei der ersten Gelegenheit, bei der dies nicht der Fall ist, wird die Behandlung dieses 3D-Punktes abgebrochen und zum nächsten 3D-Punkt in der Liste übergegangen. Ist die Bedingung jedoch für alle (m-1) anderen Kameras erfüllt, so wird der Punkt (Index) in das IntersectArray eingetragen, welches den Output dieses Verfahrensschrittes bildet.

Der Algorithmus beispielsweise als Codefragment in Pseudo C ist folgend angegeben. Dieser Algorithmus wird ebenfalls parallel für jede Kamera durchgeführt. Wie oben bezeichnet " _j" die j-te Kamera.

```
 Silhouette S; // Datenstruktur enthält Silhouettenbilder
 aller anderen (M-1) Kameras
 int k = 0;
 int* IntersectArray_j;
 for(i = 0, i < n_j, i++)
 {
  ind = ConeArray_j(i);
  for (l = 0, 1 < m, l++)
   {
     u = Pu_l(ind);
     v = Pv_l(ind);
     interior = S(l,u,v); // 1-tes Silhouettenbild aus der
     Menge der (M-1) anderen Silhouettenbilder an der Stelle (u,v)
     If (∼interior) break;
  }
  If (interior)
  {
     k = k+1;
     IntersectArray_j(k) = ind;
  }
  }
```

In diesem Algorithmus werden wegen der gewählten Datenstrukturen nur lineare Listen (Vektoren) verarbeitet. Diese Tatsache ist für die hohe Ausführungsgeschwindigkeit des Verfahrens von Bedeutung.

Im folgenden sind einige bevorzugte alternative Ausführungsformen erläutert:
Variante 1) Der Parallelisierungsgrad wird noch erhöht, indem dieser Algorithmus auf parallelarbeitende Threads/Prozessoren aufgeteilt wird. Da die einzelnen 3D-Punkte (ind) völlig unabhängig getestet werden, ist dies auf sehr einfache Weise möglich, indem man die Menge der Punkte (Elemente im ConeArray) auf mehrere Threads/Prozessoren aufteilt. Am Ende werden dann nur die einzelnen entstehenden Teil-Ergebnislisten in einer Gesamtliste (IntersectArray) durch Aneinanderreihung zusammengeführt.
Varainte 2) Anstelle der beiden Abbildungen P_u und P_v wird eine einzige Abbildung P verwendet, die den 3D-Index "ind" direkt auf die Position "pos" eines zugeordneten, linearen Bildvektors abbildet. Die Darstellung als linearer Bildvektor entsteht dadurch, dass man die Zeilen eines Bildes direkt aneinander reiht, beginnend mit der ersten Bildzeile. Diese Darstellung ist effizienter, wenn zur Repräsentation der Bilder in dem verwendeten Bildverarbeitungssystem generell lineare Bildvektoren verwendet werden (dies ist die übliche Praxis in der Bildverarbeitung). In diesem Fall hat man für jede Kamera eine solche Abbildung P (d.h. P_j, j = 1,2, ...M).

Die Umrechnung der u,v Werte auf pos-Werte geschieht folgendermaßen:
pos = v*n_cols + u (n_cols bezeichnet die Anzahl der Pixels in einer Bildzeile)

### Das Codefragment

u = Pu_l(ind);
v = Pv_l(ind);
interior = C_l(u,v);
If (∼interior) break;
ist dann zu ersetzen durch:
pos = P_l(ind);
interior = C_l(u,v);
If (∼interior) break;

Die einzelnen Abbildungen P_l werden anstelle der Abbildungen Pu_l, Pv_l in dem initalen Schritt 3 (siehe oben) off-line berechnet.

Variante 3) Diese Variante ist eine modifizierte Form der Indizierung der Punkte des 3D-Gitters. Bei dieser modifizierten Form werden die Indizes einfach durch Durchzählen der Elemente des PilesArray_j bestimmt, d.h.
1. Element: ind = 1
2. Element: ind = 2

Die Verwendung dieser modifizierten Indizes hat den Vorteil, dass in dem oben angegebenen Codefragment aufeinanderfolgende Indizes getestet werden, d.h. auf die Abbildungen (Arrays) Pu_l, Pv_l (bzw P_l gemäß Variante 2) wird in zusammenhängenden Stücken zugegriffen. Bei Rechnerarchitekturen, die Data-Caches einsetzen, können diese dann wesentlich besser genutzt werden, was zu einem erheblich schnelleren Datentransfer und damit zu einer erheblich schnelleren Verarbeitung führen kann. Allerdings ist die Indizierung der 3D-Punkte des Gitters dann nicht mehr absolut, d.h. für alle Kameras gleich (ind), sondern relativ, d.h. für jede Kamera (jedes j) unterschiedlich (ind_j). Aus diesem Grund hat man bei dieser Variante anstelle der Abbildungen für absolute Indizes Pu_1, Pv_1 (bzw P_1 gemäß Variante 2) andere Abbildungen für relative Indizes Pu_1_j, Pv_1_j (bzw P_1_j gemäß Variante 2) in dem oben angegebenen Algorithmus zu verwenden. Diese müssen dann im Schritt 3 entsprechend initial berechnet werden. Hierzu verwendet man einfach die PilesArrays, die auf absoluten Indizes basieren (d.h. wie in Schritt 2 beschrieben). Trivialerweise ergibt sich der folgende Zusammenhang zwischen absoluter und relativer Indizierung:
ind = PilesArray_j(ind_j)

Damit ergibt sich z.B. für die Abbildung Pu_1_j der Zusammenhang:
u = Pu_1(ind) = Pu_1(PilesArray_j(ind_j) =: Pu_1_j(ind_j).

### 13. Schritt: Teilergebnisse zusammenfügen (Block 550)

Gemäß Schritt 12 liefert jede Kamera im zugeordneten IntersectArray_j einen Teil der Oberflächenpunkte des zu rekonstruierenden Objekts. Diese Punkte müssen nun in einem einzigen Ergebnis (IntersectArray) zusammengeführt werden. Dies und die nachfolgenden Schritte werden vorzugsweise außerhalb der einzelnen Kamera-Workstations auf einer nach gelagerten zentralen Workstation implementiert, siehe Fig. 6. Hierzu sendet jede Kamera-Workstation ihre ermittelten Punkte (IntersectArray_j) an die zentrale Workstation. Dies kann beispielsweise unter Verwendung von IP-Verbindungen (z.B. Gigabit Ethernet) gegebenenfalls unter Verwendung einer einfachen Codierung erfolgen.

Bei der Zusammenführung der Teilergebnisse zu dem Ergebnis (IntersectArray) werden vorzugsweise etwaige Doppelnennungen vermieden.

Wenn die Variante 3 des Schrittes 12 verwendet wird, müssen vor der Zusammenführung der Teilergebnisse die jeweiligen relativen Indizes jeder Kamera wieder in die absoluten Indizes zurückgerechnet werden, um die 3D-Punkte im Gitter eindeutig zu identifizieren. Hierzu verwendet man wieder den Zusammenhang, siehe Schritt 12:
ind = PilesArray_j(ind_j).

### 14. Schritt: Bestimmung der Oberflächenpunkte und Farbwerte (Block 555)

Das IntersectArray des letzten Schrittes enthält die Indizes der 3D-Punkte in einer Umgebung der Objektoberfläche. Aus dieser Menge müssen nun diejenigen Punkte ausgesondert werden, die nicht auf der Objektoberfläche liegen. Zu diesem Zweck wird das IntersectArray sequentiell durchgegangen und für jeden Punkt getestet, ob alle Punkte in einer Nachbarschaft auf dem 3D-Gitter enthalten sind. Trifft dies zu, so wird dieser 3D-Punkt nicht in das Ergebnis-Array (SurfacesArray) aufgenommen. Alle anderen Punkte werden sequentiell nach SurfacesArray kopiert. Die Definition der Nachbarschaft hängt von dem Typ des verwendeten 3D-Gitters ab. Wenn das oben beschriebene rechteckige Gitter verwendet wird, können z.B. die 26 direkten Nachbarpunkte eines 3D-Punktes verwendet werden. Die entsprechenden Indizes der Nachbarpunkte erhält man einfach unter Beachtung der in Schritt 1 festgelegten Nummerierung.

Dieser Prozess liefert zwei Mengen von Oberflächenpunkten: Die gesuchte äußere Oberfläche und eine innere Oberfläche. Von Interesse ist aber nur die äußere Oberfläche, da diese die tatsächliche Oberfläche des Objektes darstellt. Die innere Oberfläche entsteht durch die Verbreiterung der Objekt-Kontur in Schritt 10 und wird durch den in das Objektinnere gerichteten Rand der verbreiterten Objekt-Kontur hervorgerufen. Um die unnötige innere Objektoberfläche zu eliminieren, wird mit einem schnellen Triangulierungsverfahren zunächst eine Triangulierung aller Oberflächenpunkte vorgenommen. Die Qualität der Triangulierung spielt hier keine Rolle, es müssen lediglich zwei Bedingungen gewährleistet sein:
1) Das Verfahren muss dichte Dreiecksnetze liefern
2) Das Verfahren darf keine neuen 3D-Punkte liefern

Dies kann man z.B. mit einer entsprechend vereinfachten Version des bekannten Marching Cube Verfahrens erreichen, so dass sich die Triangulation sehr schnell durchführen lässt. Im Ergebnis entstehen zwei dichte Dreiecksnetze und zwar je eines für die innere und eines für die äußere Oberfläche. Die Punkte des äußeren Dreiecksnetzes lassen sich dann durch Anwendung eines üblichen Sichtbarkeitstests finden, d.h. alle Punkte, die sichtbar sind, gehören zur gesuchten äußeren Oberfläche und werden in einem ResultArray gespeichert.

### 15. Schritt: Bestimmung der 3D-Koordinaten der Oberflächenpunkte (Block 560)

Am Ende des letzten Schrittes sind die Indizes der gesuchten 3D-Oberflächenpunkte des zu rekonstruierenden Objektes in ResultArray enthalten. In vielen Fällen werden für weitere Verarbeitungsschritte (z.B. graphische Darstellung des Objekts mit einer Rendering-Engine) die 3D-Koordinaten der Punkte benötigt. Diese lassen sich sehr einfach mit den in Schritt 1 berechneten Arrays Ind2X, Ind2Y und Ind2Z berechnen:
X = Ind2X(ind)
Y = Ind2Y(ind)
Z = Ind2Z(ind)

Diese Berechnungen werden für jedes Element des ResultArray durchgeführt und in drei Ergebnis-Arrays X_Array, Y_Array, Z_Array kopiert, die die 3D-Koordinaten der Oberflächenpunkte enthalten.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

## Patentansprüche

1. Verfahren zur Rekonstruktion der Oberfläche von 3D-Objekten unter Verwendung mehrerer, M, Kameras (11), die über ein Datennetzwerk verbunden sind, wobei sich das 3D-Objekt in einem durch die Kameras definierten Arbeitsraum befindet, gekennzeichnet durch
a) einmalige initiale Berechnung, für die gegebene Kameraanordnung der M Kameras, von 3D-Daten des diskretisierten Arbeitsraumes in der Form linear angeordneter 3D-Punktestapel sowie Abbildungsdaten anhand eines Abbildungsmodells, wobei jeder 3D-Punktestapel diejenigen 3D-Punkte enthält, die in der Nähe eines aus der jeweiligen Kamera projizierten Strahls liegen;
b) Aneinanderreihen der initial berechneten 3D-Punktestapel in einem einzigen, linearen Array (PilesArray) für jede Kamera,
c) Bestimmen derjenigen 3D-Punktestapel des PilesArrays für jede Kamera, die in einer Umgebung der Oberfläche des visuellen Konus des Objekts liegen, und Kopieren dieser 3D-Punktestapel in ein weiteres lineares Array (ConeArray),
d) sequentielles Testen für alle 3D-Punkte des ConeArrays, ob der 3D-Punkt in der Schnittmenge der Koni der jeweils anderen m-1 Kameras liegen und
e) Bestimmung der Oberflächenpunkte durch zusammenfassende Verarbeitung der Ergebnisse von Schritt d) aller M Kameras zur Oberflächenrekonstruktion.

2. Verfahren nach Anspruch 1, wobei Schritt a) die Schritte aufweist:
a1) Diskretisierung des Arbeitsraumes und Indizierung der einzelnen Punkte der sich ergebenden 3D-Gitterpunkte;
a2) Bestimmen der einem Bildpunkt r zuzurechnenden 3D-Punkte R im Gitter durch Anwendung eines Abbildungsmodells r = Proi * R, wobei R = (WX, WY, WZ, W)^{T} die homogenen Koordinaten eines 3D-Punktes (X, Y, Z) und r = (wx, wy, w)^{T} die homogenen Koordinaten des zugehörigen Bildpunktes (x, y) bezeichnen, und
Speichern der Indizes der 3D-Punkte in einem drei-dimensionalen Feld, so dass jedem Bildpunkt ein Stapel von 3D-Punkten des 3D-Gitters zugeordnet ist;
a3) Bestimmen der Abbildungen der Indizes der Punkte des 3D-Gitters in die Bildebenen der M Kameras (11) und
a4) Indizieren des 3D-Gitters zur Ausnutzung von Caching-Strukturen, wobei das Indizieren durch Durchzählen der Elemente des PilesArrays bestimmt wird.

3. Verfahren nach Anspruch 1 oder 2 , wobei Schritt c) die Schritte aufweist:
c1) Trennen (510) des zu rekonstruierenden Objektes vom Bildhintergrund für jedes eingelesene Kamerabild, um ein Objekt-Silhouettenbild zu erhalten;
c2) in jeder Kamera erfolgendes Berechnen (535), aus dem im Schritt c1) erhaltenen Objekt-Silhouettenbilds, des Objekt-Konturbildes, das die Objekt-Konturen enthält und
c3) Auslesen (540), von 3D-Punktestapeln aus dem PilesArray, die zu einer Umgebung der Objektkontur gehören und Aneinanderreihung dieser 3D-Punktestapel in dem ConeArray.

4. Verfahren nach Anspruch 1 oder 2, wobei Schritt d) die Schritte aufweist:
d1) Senden (520) der von einer Kamera erhaltenen Objekt-Silhouette des aufgenommenen Objektes an die jeweils anderen Kameras;
d2) Empfangen (525) der von den jeweils anderen Kameras gesendeten Objekt-Silhouette des aufgenommenen Objektes und
d3) Berechnen (545), für jede Kamera, der Datenpunkt-Schnittmenge der einzelnen Konusränder, wobei für eine Kamera ein 3D-Punkt des jeweiligen ConeArrays zum zu berechnenden Durchschnitt gehört, wenn er jeweils in die empfangenen Objekt-Silhouetten aller jeweils anderen Kameras fällt.

5. Verfahren nach Anspruch 1 oder 2 , wobei Schritt e) die Schritte aufweist:
e1) Zusammenfügen (550) der jeweils einen Teil der Oberflächenpunkte des zu rekonstruierenden Objektes repräsentierenden Schnittmengen, die jeweils von den Kameras bereitgestellt werden, zu einer Gesamtmenge an Datenpunkten;
e2) Bestimmen (555) der Oberflächenpunkte aus der Gesamtmenge an Datenpunkten und
e3) Bestimmen (560) der 3D-Koordinaten der Oberflächenpunkte.

6. Verfahren nach Anspruch 3, wobei in Schritt c2) die Berechnung des Objekt-Konturbildes erfolgt durch Subtraktion einer morphologisch erodierten Version des Silhouettenbildes von dem Silhouettenbild.

7. Verfahren nach Anspruch 3, wobei in Schritt c2) die Berechnung des Objekt-Konturbildes erfolgt durch Dilatation des Silhouettenbildes und anschließendem Subtrahieren der erodierten Version des Silhouettenbildes.

8. Verfahren nach einem der Ansprüche 4 bis 7, wobei der Schritt d1) parallel zu dem Schritt d2) erfolgt.

9. Verfahren nach einem der Ansprüche 4 bis 8, wobei in Schritt d2) die empfangenen Objekt-Silhouetten zwischengespeichert werden, um Netzwerk-Laufzeitunterschiede auszugleichen.

10. Verfahren nach einem der Ansprüche 3 bis 9, wobei nach Schritt c1) vor dem Versenden der Schritt erfolgt: Encodieren (515) der Objekt-Silhouette.

11. Verfahren nach einem der Ansprüche 3 bis 10, wobei nach Schritt d2) der Schritt erfolgt: Decodierten(530) der empfangenen Objekt-Silhouette der anderen Kameras, sofern die anderen Kameras encodierte Objekt-Silhouetten versenden.

12. Verfahren nach einem der Ansprüche 3 bis 11, wobei die Schritte c1) bis c3) und d1) bis d3) für jedes der in einem Zeitschritt gelieferten M Kamerabilder parallel erfolgen.

13. Verfahren nach einem der Ansprüche 3 bis 12, ferner mit dem Schritt c0) des synchronen Einlesens (505) des jeweiligen Kamerabildes.

14. Verfahren nach einem der Ansprüche 3 bis 13, wobei Schritt d3) für jede Kamera separat und parallel erfolgt.

15. System zur Rekonstruktion der Oberfläche von 3D-Objekten, wobei das System mehrere, M, Kameras (11) aufweist und jede Kamera einer Recheneinheit zugeordnet ist, wobei die Recheneinheiten über ein Datennetzwerk verbunden sind, wobei sich das 3D-Objekt in einem durch die Kameras definierten Arbeitsraum befindet, wobei die Recheneinheiten eingerichtet sind, ein Verfahren nach einem der Ansprüche 1 bis 14 auszuführen.

## Claims

1. Method for reconstructing the surface of 3D objects by use of a plurality, M, of cameras (11) which are connected via a data network, wherein the 3D object is disposed within a working space defined by the cameras,
**characterized by**
a) one-time initial calculation of 3D data of the discretized working space in the form of linearly arranged piles of 3D points and imaging data based on an imaging model for the given camera arrangement of the M cameras, wherein each pile of 3D points includes those 3D points that are disposed in the proximity of a beam projected from the corresponding camera;
b) linking the initially calculated piles of 3D points into a single linear array (PilesArray) for each camera;
c) determining those piles of 3D points of the PilesArray for each camera that are disposed in the proximity of the surface of the visual cone of the object and copying these piles of 3D points into another linear array (ConeArray);
d) sequentially testing for all 3D points of the ConeArray if the 3D point is arranged within the intersection of the cones of the respective other m-1 cameras; and
e) determining the surface points by combined processing of the results of step d) of all M cameras for surface reconstruction.

2. Method according to claim 1, wherein step a) comprises the steps of:
a1) discretizing the work space and indexing the individual points of the resulting 3D grid points;
a2) determining the 3D points R in the grid to be attributed to a pixel r by using an imaging model r = Proj * R, where R = (WX, WY, WZ, W)^{T} denotes the homogeneous coordinates of a 3D point (X, Y, Z) and r = (wx, wy, w)^{T} denotes the homogeneous coordinates of the corresponding pixel (x, y), and storing the indices of the 3D points in a three-dimensional array, such that each pixel is associated with a pile of 3D points of the 3D grid;
a3) determining the mappings of the indices of the points of the 3D grid into the image planes of the M cameras (11); and
a4) indexing the 3D grid in order to utilize caching structures, wherein the indexing is determined by enumerating the elements of the PilesArray.

3. Method according to claim 1 or 2, wherein step c) comprises the steps of:
c1) separating (510) the object to be reconstructed from the image background for each read camera image to obtain an object silhouette image;
c2) in each camera: calculating (535) the object contour image including the object contours from the object silhouette image obtained in step c1);
c3) reading out (540) piles of 3D points from the PilesArray which belong to a proximity of the object contour and linking these piles of 3D points into the ConeArray.

4. Method according to claim 1 or 2, wherein step d) comprises the steps of:
d1) transmitting (520) the object silhouette of the captured object received from one camera to the respective other cameras;
d2) receiving (525) the object silhouette of the captured object transmitted from the respective other cameras; and
d3) calculating (545) for each camera the data point intersection of the individual cone edges, wherein for a camera a 3D point of the respective ConeArray is associated to the average to be calculated, if it respectively falls into the received object silhouettes of all respective other cameras.

5. Method according to claim 1 or 2, wherein step e) comprises the steps of:
e1) assembling (550) the intersections respectively representing a part of the surface points of the object to be reconstructed which are respectively provided by the cameras into a total quantity of data points;
e2) determining (555) the surface points from the total quantity of data points; and
e3) determining (560) the 3D coordinates of the surface points.

6. Method according to claim 3, wherein in step c2) the calculation of the object contour image is carried out by subtracting a morphologically eroded version of the silhouette image from the silhouette image.

7. Method according to claim 3, wherein in step c2) the calculation of the object contour image is carried out by dilation of the silhouette image and subsequent subtraction of the eroded version of the silhouette image.

8. Method according to any one of claims 4 to 7, wherein step d1) is carried out in parallel to step d2).

9. Method according to any one of claims 4 to 8, wherein in step d2) the received object silhouettes are buffered to compensate for network delay differences.

10. Method according to any one of claims 3 to 9, wherein after step c1) and prior to transmitting the step of encoding (515) the object silhouette is carried out.

11. Method according to any one of claims 3 to 10, wherein after step d2) the step of decoding (530) the received object silhouette of the other cameras is carried out, inasfar as the other cameras transmit encoded object silhouettes.

12. Method according to any one of claims 3 to 11, wherein the steps c1) through c3) and d1) through d3) are carried out in parallel for each of the M camera images supplied within one time step.

13. Method according to any one of claims 3 to 12, further comprising the step c0) of synchronously reading (505) the respective camera image.

14. Method according to any one of claims 3 to 13, wherein step d3) is carried out separately and in parallel for each camera.

15. System for reconstructing the surface of 3D objects, wherein the system comprises a plurality, M, of cameras (11) and each camera is associated to a computing unit, wherein the computing units are connected via a data network, wherein the 3D object is disposed within a working space defined by the cameras, and wherein the computing units are arranged to carry out a method according to any one of claims 1 to 14.

## Revendications

1. Procédé de reconstitution de la surface d'objets 3D recourant à plusieurs, soit à M caméras (11), reliées par un réseau de données, l'objet 3D se trouvant dans un espace de travail défini par les caméras, **caractérisé par**
a) le calcul initial unique, pour la disposition donnée des M caméras, de données 3D de l'espace de travail discrétisé sous la forme de piles de points 3D agencées linéairement, et de données de représentation sur la base d'un modèle de représentation, chaque pile de points 3D contenant les points 3D situés à proximité d'un faisceau projeté par la caméra correspondante ;
b) l'alignement des piles de points 3D initialement calculées dans un seule réseau linéaire (PilesArray) pour chaque caméra,
c) la détermination pour chaque caméra des piles de points 3D du réseau de piles qui sont situées dans l'environnement de la surface du cône visuel de l'objet, et la copie desdites piles de points 3D dans un autre réseau linéaire (ConeArray),
d) le test séquentiel pour tous les points 3D du réseau de cône pour déterminer si chaque point 3D est situé à l'intersection des cônes des autres m-1 caméras, et
e) la détermination des points de surface par traitement récapitulatif des résultats de l'étape d) pour toutes les M caméras pour la reconstitution de surface.

2. Procédé selon la revendication 1, où l'étape a) comprend les étapes suivantes :
a1) discrétisation de l'espace de travail et indexation des différents points des points de grille 3D obtenus ;
a2) détermination des points 3D R attribuables à un pixel r dans la grille par application d'un modèle de représentation r = Proj * R, où R = (WX, WY, WZ, W)^{T} représente les coordonnées homogènes d'un point 3D (X, Y, Z) et r = (wx, wy, w)^{T} les coordonnées homogènes du pixel (x, y) correspondant, et mémorisation des indices des points 3D dans un champ tridimensionnel, de manière à affecter à chaque pixel une pile de points 3D de la grille 3D ;
a3) détermination des représentation des indices des points de la grille 3D dans les plans d'image des M caméras (11), et
a4) indexation de la grille 3D pour l'exploitation de structures de mise en cache, l'indexation étant déterminée par comptage des éléments du réseau de piles.

3. Procédé selon la revendication 1 ou la revendication 2, où l'étape c) comprend les étapes suivantes :
c1) détachement (510) de l'objet à reconstituer sur l'arrière-plan d'image pour chaque image de caméra importée, afin d'obtenir une image de silhouette d'objet ;
c2) calcul (535) effectué dans chaque caméra, à partir de l'image de silhouette d'objet obtenue en étape c1), de l'image de contour d'objet comprenant les contours d'objet, et
c3) extraction (540) hors du réseau de piles de piles de points 3D appartenant à l'environnement du contour d'objet, et alignement desdites piles de points 3D dans le réseau de cône.

4. Procédé selon la revendication 1 ou la revendication 2, où l'étape d) comprend les étapes suivantes :
d1) envoi (520) aux autres caméras de la silhouette de l'objet enregistré obtenue par une caméra ;
d2) réception (525) de la silhouette de l'objet enregistré envoyée par les autres caméras, et
d3) calcul (545) pour chaque caméra de l'intersection de points de données des différents bords de cône, un point 3D du réseau de cône appartenant à l'intersection à calculer pour une caméra s'il est inclus dans les silhouettes d'objets reçues de toutes les autres caméras.

5. Procédé selon la revendication 1 ou la revendication 2, où l'étape e) comprend les étapes suivantes :
e1) réunion (550), pour former une totalité de points de données, des intersections représentant chacune une partie des points de surface de l'objet à reconstituer et délivrées par les caméras ;
e2) détermination (555) des points de surface à partir de la totalité de points de données, et
e3) détermination (560) des coordonnées 3D des points de surface.

6. Procédé selon la revendication 3, où, en étape c2), le calcul de l'image de contour d'objet est effectué par soustraction de l'image de silhouette d'une version morphologiquement érodée de l'image de silhouette.

7. Procédé selon la revendication 3, où, en étape c2), le calcul de l'image de contour d'objet est effectué par dilatation de l'image de silhouette et soustraction consécutive de la version érodée de l'image de silhouette.

8. Procédé selon l'une des revendications 4 à 7, où l'étape d1) est exécutée parallèlement à l'étape d2).

9. Procédé selon l'une des revendications 4 à 8, où, en étape d2), les silhouettes d'objet reçues sont mises en mémoire tampon pour compenser des gigues de réseau.

10. Procédé selon l'une des revendications 3 à 9, où l'étape d'encodage (515) de la silhouette d'objet est exécutée après l'étape c1), préalablement à l'envoi.

11. Procédé selon l'une des revendications 3 à 10, où l'étape de décodage (530) de la silhouette d'objet reçue des autres caméras est exécutée après l'étape d2), si les autres caméras envoient des silhouettes d'objet codées.

12. Procédé selon l'une des revendications 3 à 11, où les étapes c1) à c3) et d1) à d3) sont exécutées parallèlement pour chacune des M images de caméra délivrées pendant un incrément de temps.

13. Procédé selon l'une des revendications 3 à 12, comprenant en outre l'étape c0) de lecture (505) synchrone de chaque image de caméra.

14. Procédé selon l'une des revendications 3 à 13, où l'étape d3) est exécutée séparément et parallèlement pour chaque caméra.

15. Système pour la reconstitution de la surface d'objets 3D, où ledit système comprend plusieurs, soit M caméras (11), et où chaque caméra est affectée à une unité de calcul, les unités de calcul étant reliées par un réseau de données, l'objet 3D se trouvant dans un espace de travail défini par les caméras, les unités de calcul étant prévues pour exécuter un procédé selon l'une des revendications 1 à 14.
